# EUROPEAN PATENT SPECIFICATION

(11) **EP 2 053 090 B1**
(45) Date of publication and mention of the grant of the patent: **02.12.2015**
(21) Application number: 08167523.3
(22) Date of filing: 24.10.2008
(51) Int. Cl.: C08L 33/12, B32B 27/30, C08L 51/00, C08L 55/02

(54) **RESINOUS COMPOSITIONS, ARTICLES MADE THEREFROM AND PROCESS**
HARZZUSAMMENSETZUNG, DARAUS HERGESTELLTE ARTIKEL UND VERFAHREN
COMPOSITIONS RÉSINEUSES, ARTICLES FABRIQUÉS À PARTIR DE CELLES-CI ET PROCÉDÉ

(30) Priority: 26.10.2007 US 982819 P
(43) Date of publication of application: 29.04.2009
(73) Proprietor: SABIC Global Technologies B.V., 4612 PX Bergen op Zoom (NL)
(72) Inventor: Akkermans, Roland, 4651 DB Steenbergen (NL); Huijs, Frank, 4819 HE Breda (NL); Arnould, Dominique Daniel, 4811 VB Breda (NL)
(74) Representative: Carpintero Lopez, Francisco

(56) References cited:
- EP-A- 0 522 710
- WO-A-03/074608
- WO-A-2004/000936
- WO-A-2008/032907
- WO-A1-2005/000938
- US-A- 4 113 798
- US-A- 5 852 124
- DATABASE CA [Online] CHEMICAL ABSTRACTS SERVICE, COLUMBUS, OHIO, US; XP002512131 retrieved from STN Database accession no. 149:177282 & JP 2008 174683 A (TORAY INDUSTRIES, INC., JAPAN) 31 July 2008 (2008-07-31)
- DATABASE CA [Online] CHEMICAL ABSTRACTS SERVICE, COLUMBUS, OHIO, US; XP002512132 retrieved from STN Database accession no. 130:140059 & JP 11 021323 A (MITSUBISHI RAYON CO., LTD., JAPAN) 26 January 1999 (1999-01-26)
- DATABASE CA [Online] CHEMICAL ABSTRACTS SERVICE, COLUMBUS, OHIO, US; XP002512133 retrieved from STN Database accession no. 110:76827 & JP 63 245461 A (SUMITOMO NAUGATUCK CO., LTD., JAPAN) 12 October 1988 (1988-10-12)

## Description

### BACKGROUND

The present invention relates to multilayer articles having reduced susceptibility to mar and/or scratch formation on the surface of the articles and a good balance of other physical properties.

Compositions comprising acrylonitrile-butadiene-styrene copolymer (ABS) typically have good mechanical performance and colorability combined with good processability as shown, for example, by good flow properties. However, the scratch resistance of typical ABS compositions is rather poor (for example, a rating of 2B in 1 kilogram pencil hardness test). Also, colors such as deep black (e.g. "piano black") cannot be obtained in typical ABS compositions. When high scratch resistance is needed, blends of ABS with poly(methyl methacrylate) (PMMA) can be employed, but these compositions are deficient in their balance of flow and impact properties, meaning that improvements in the flow of the material will reduce the impact strength to an unacceptable value. Hence there is a need for ABS compositions which possess an attractive balance of mechanical performance and high processability combined with high scratch resistance and excellent colorability.

International Publication No. WO 2008/032907 generally discloses a transparent ABS resin comprising about 10-50 parts by weight of a rubber / (meth)acrylate-aromatic vinyl-unsaturated nitrile graft copolymer; about 50-90 parts by weight of a thermoplastic resin matrix; and about 0.2-0.5 parts by weight of a flow agent, per hundred parts by weight of the combined ABS and thermoplastic resin matrix.

Japanese Publication No. 2008-174683 generally discloses rubber-reinforced, styrene-based, transparent resin composition comprising 10-95 parts of a thermoplastic copolymer formed by copolymerizing vinyl monomes and a polyfunctional monomer having an allyl group and 90-5 parts of a graft copolymer containing an elastomeric material formed by graft copolymerization of vinyl monomers in the presence of a rubber.

International Publication No. WO 2004/000936 generally discloses a rubber-modified thermoplastic resin composition comprising a first thermoplastic phase at least a portion of which is grafted to an elastomeric phase, and a second thermoplastic phase prepared separately in the absence of elastomeric phase and added to the composition. The first thermoplastic phase comprises structural units derived from at least one vinyl aromatic monomer, at least one monoethylenically unsaturated nitrile monomer, and at least one (C₁-C₁₂)-alkyl or aryl meth(acrylate). The second thermoplastic phase comprises structural units derived from at least one vinyl aromatic monomer and at least one monoethylenically unsaturated nitrile monomer.

U.S. Patent No. 4,113,798 generally discloses a transparent ABS composition comprising a matrix terpolymer of monovinylidene aromatic, ethylenically unsaturated nitrile and acrylate monomers blended with a graft copolymer having polymers of monovinylidene aromatic and ethylenically unsaturated monomers grafted onto a diene rubber substrate.

European Publication No. 05552710 generally discloses a graft copolymer comprising a rubber substrate formed from a diene monomer and a styrene monomer and having an average latex size of not greater than about 100 nm, and a grafted portion formed from at least one styrene monomer and an acrylic monomer.

International Publication No. WO 03/074608 generally discloses weatherable polymers comprising a poly(alkyl acrylate) rubber based ASA graft phase (preferably poly(butyl acrylate) rubber, with a graft of SAN) in combination with a vinyl aromatic / vinyl cyanide / vinyl carboxylic acid ester rigid matrix phase. A preferred matrix phase is a blend of PMMA and MMA-SAN.

Japanese Publication No. 11-021323 generally discloses a graft copolymer (ABS resin) comprising 10-70 parts of rubber polymer grafted with 90-30 parts copolymer derived from an aromatic vinyl monomer and vinyl cyanide monomer.

Japanese Publication No. 63-245641 generally discloses a thermoplastic resin composition consisting of 20-75 wt% graft copolymer obtained by grafting an aromatic vinyl monomer (styrene) and a vinyl cyanide monomer (acrylonitrile) onto a diene rubber (styrenebutadiene rubber); and 80-25 wt% of a terpolymer obtained from 3-50 wt% aromatic vinyl monomer, 2-50 wt% vinyl cyanide monomer, and 40-95 wt% alkyl unsaturated carboxylate (methyl methacrylate).

### BRIEF DESCRIPTION

The present invention comprises a multilayer article comprising at least one layer formed from a resinous composition having reduced susceptibility to scratch formation during abrasion of its surface, wherein the composition comprises: (i) 10-40 wt.%, based on the weight of resinous components in the composition, of at least one rubber modified thermoplastic resin comprising a discontinuous elastomeric phase dispersed in a first rigid thermoplastic phase, wherein at least a portion of the first rigid thermoplastic phase is grafted to the elastomeric phase, and wherein the elastomeric phase comprises structural units derived from a monomer selected from the group consisting of butadiene and butadiene-styrene mixture; and wherein the first rigid thermoplastic phase comprises structural units derived from at least one vinyl aromatic monomer, at least one monoethylenically unsaturated nitrile monomer, and optionally at least one (C₁-C₁₂)alkyl- and aryl-(meth)acrylate monomer; and (ii) 90-60 wt.%, based on the weight of resinous components in the composition, of a second rigid thermoplastic polymer comprising a polymer with structural units derived from monomers selected from the group consisting of styrene/acrylonitrile/methyl methacrylate, alpha-methyl styrene/acrylonitrile/ methyl methacrylate, alpha-methylstyrene/styrene/acrylonitrile/methyl methacrylate, and mixtures thereof, wherein said structural units are derived from 15-68 wt. % methyl methacrylate (MMA), based on the weight of monomers employed, and (iii) at least one additive, colorant, dye or pigment.

In another embodiment the present invention comprises a process for forming the above article.

### DETAILED DESCRIPTION

In the following specification and the claims which follow, reference will be made to a number of terms which shall be defined to have the following meanings. The singular forms "a", "an" and "the" include plural referents unless the context clearly dictates otherwise. The terminology "monoethylenically unsaturated" means having a single site of ethylenic unsaturation per molecule. The terminology "polyethylenically unsaturated" means having two or more sites of ethylenic unsaturation per molecule. The terminology "(meth)acrylate" refers collectively to acrylate and methacrylate; for example, the term "(meth)acrylate monomers" refers collectively to acrylate monomers and methacrylate monomers. The term "(meth)acrylamide" refers collectively to acrylamides and methacrylamides.

The term "alkyl" as used in the various embodiments of the present invention is intended to designate linear alkyl, branched alkyl, aralkyl, cycloalkyl, bicycloalkyl, tricycloalkyl and polycycloalkyl radicals containing carbon and hydrogen atoms, and optionally containing atoms in addition to carbon and hydrogen, for example atoms selected from Groups 15, 16 and 17 of the Periodic Table. Alkyl groups may be saturated or unsaturated, and may comprise, for example, vinyl or allyl. The term "alkyl" also encompasses that alkyl portion of alkoxide groups. In various embodiments normal and branched alkyl radicals are those containing from 1 to about 32 carbon atoms, and include as illustrative non-limiting examples C₁-C₃₂ alkyl (optionally substituted with one or more groups selected from C₁-C₃₂ alkyl, C₃-C₁₅ cycloalkyl or aryl); and C₃-C₁₅ cycloalkyl optionally substituted with one or more groups selected from C₁-C₃₂ alkyl. Some particular illustrative examples comprise methyl, ethyl, n-propyl, isopropyl, n-butyl, sec-butyl, tertiary-butyl, pentyl, neopentyl, hexyl, heptyl, octyl, nonyl, decyl, undecyl and dodecyl. Some illustrative non-limiting examples of cycloalkyl and bicycloalkyl radicals include cyclobutyl, cyclopentyl, cyclohexyl, methylcyclohexyl, cycloheptyl, bicycloheptyl and adamantyl. In various embodiments aralkyl radicals are those containing from 7 to about 14 carbon atoms; these include, but are not limited to, benzyl, phenylbutyl, phenylpropyl, and phenylethyl. The term "aryl" as used in the various embodiments of the present invention is intended to designate substituted or unsubstituted aryl radicals containing from 6 to 20 ring carbon atoms. Some illustrative non-limiting examples of these aryl radicals include C₆-C₂₀ aryl optionally substituted with one or more groups selected from C₁-C₃₂ alkyl, C₃-C₁₅ cycloalkyl, aryl, and fictional groups comprising atoms selected from Groups 15, 16 and 17 of the Periodic Table. Some particular illustrative examples of aryl radicals comprise substituted or unsubstituted phenyl, biphenyl, tolyl, naphthyl and binaphthyl.

Compositions in embodiments of the present invention comprise a rubber modified thermoplastic resin comprising a discontinuous elastomeric phase dispersed in a rigid thermoplastic phase, wherein at least a portion of the rigid thermoplastic phase is grafted to the elastomeric phase. The rubber modified thermoplastic resin employs at least one rubber substrate for grafting. The rubber substrate comprises the discontinuous elastomeric phase of the composition. The rubber substrate typically has a glass transition temperature, Tg, in one embodiment less than or equal to 25°C, in another embodiment below about 0°C, in another embodiment below about minus 20°C, and in still another embodiment below about minus 30°C. As referred to herein, the Tg of a polymer is that value as measured by differential scanning calorimetry (DSC; heating rate 20°C/minute, with the Tg value being determined at the inflection point).

The elastomeric phase comprises a polymer having structural units derived from 1,3-butadiene.

In various embodiments the rubber substrate may also optionally comprise a minor amount, for example up to about 5 wt.%, of structural units derived from at least one polyethylenically unsaturated monomer, for example those that are copolymerizable with a monomer used to prepare the rubber substrate. A polyethylenically unsaturated monomer is often employed to provide cross-linking of the rubber particles and/or to provide "graftlinking" sites in the rubber substrate for subsequent reaction with grafting monomers. Suitable polyethylenically unsaturated monomers include, but are not limited to, butylene diacrylate, divinyl benzene, butene diol dimethacrylate, trimethylolpropane tri(meth)acrylate, allyl methacrylate, diallyl methacrylate, diallyl maleate, diallyl fumarate, diallyl phthalate, triallyl methacrylate, triallyl cyanurate, triallyl isocyanurate, the acrylate of tricyclodecenylalcohol and mixtures comprising at least one of such monomers. In a particular embodiment the rubber substrate comprises structural units derived from triallyl cyanurate.

In some embodiments the rubber substrate may optionally comprise structural units derived from minor amounts of other unsaturated monomers, for example up to 25 percent by weight ("wt.%") of structural units derived from one or more monomers selected from (C₂-C₈)olefin monomers, alkenyl aromatic monomers, vinyl aromatic monomers and monoethylenically unsaturated nitrile monomers. As used herein, the term "(C₂-C₈)olefin monomers" means a compound having from 2 to 8 carbon atoms per molecule and having a single site of ethylenic unsaturation per molecule. Suitable (C₂-C₈)olefin monomers include, e.g., ethylene, propene, 1-butene, 1-pentene, heptene. In other particular embodiments the rubber substrate may optionally include up to 25 wt.% of structural units derived from one or more monomers selected from (meth)acrylate monomers, alkenyl aromatic monomers and monoethylenically unsaturated nitrile monomers. Suitable copolymerizable (meth)acrylate monomers include C₁-C₁₂ aryl or haloaryl substituted acrylate, C₁-C₁₂ aryl or haloaryl substituted methacrylate, or mixtures thereof; monoethylenically unsaturated carboxylic acids, such as, for example, acrylic acid, methacrylic acid and itaconic acid; glycidyl (meth)acrylate, hydroxy alkyl (meth)acrylate, hydroxy(C₁-C₁₂)alkyl (meth)acrylate, such as, for example, hydroxyethyl methacrylate; (C₄-C₁₂)cycloalkyl (meth)acrylate monomers, such as, for example, cyclohexyl methacrylate; (meth)acrylamide monomers, such as, for example, acrylamide, methacrylamide and N-substituted-acrylamide or N-substituted-methacrylamides; maleimide monomers, such as, for example, maleimide, N-alkyl maleimides, N-aryl maleimides, N-phenyl maleimide, and haloaryl substituted maleimides; maleic anhydride; methyl vinyl ether, ethyl vinyl ether, and vinyl esters, such as, for example, vinyl acetate and vinyl propionate. Suitable alkenyl aromatic monomers include vinyl aromatic monomers, such as, for example, styrene and substituted styrenes having one or more alkyl, alkoxy, hydroxy or halo substituent groups attached to the aromatic ring, including, alpha-methyl styrene, p-methyl styrene, 3,5-diethylstyrene, 4-n-propylstyrene, 4-isopropylstyrene, vinyl toluene, alpha-methyl vinyl toluene, vinyl xylene, trimethyl styrene, butyl styrene, t-butyl styrene, chlorostyrene, alpha-chlorostyrene, dichlorostyrene, tetrachlorostyrene, bromostyrene, alpha-bromostyrene, dibromostyrene, p-hydroxystyrene, p-acetoxystyrene, methoxystyrene and vinyl-substituted condensed aromatic ring structures, such as, for example, vinyl naphthalene, vinyl anthracene, as well as mixtures of vinyl aromatic monomers and monoethylenically unsaturated nitrile monomers such as, for example, acrylonitrile, ethacrylonitrile, methacrylonitrile, alpha-bromoacrylonitrile and alpha-chloro acrylonitrile. Substituted styrenes with mixtures of substituents on the aromatic ring are also suitable. As used herein, the term "monoethylenically unsaturated nitrile monomer" means an acyclic compound that includes a single nitrile group and a single site of ethylenic unsaturation per molecule and includes, acrylonitrile, methacrylonitrile, alpha-chloro acrylonitrile.

In a particular embodiment the elastomeric phase comprises from 60 to 100 wt.% repeating units derived from one or more conjugated diene monomers and from 0 to 40 wt.% repeating units derived from one or more monomers selected from vinyl aromatic monomers and monoethylenically unsaturated nitrile monomers, such as, for example, a styrene-butadiene copolymer, an acrylonitrile-butadiene copolymer or a styrene-butadiene-acrylonitrile copolymer. In another particular embodiment the elastomeric phase comprises from 70 to 90 wt.% repeating units derived from one or more conjugated diene monomers and from 30 to 10 wt.% repeating units derived from one or more monomers selected from vinyl aromatic monomers.

The rubber substrate may be present in the rubber modified thermoplastic resin in one embodiment at a level of from about 20 wt.% to about 75 wt.%; in another embodiment at a level of from about 30 wt.% to about 75 wt.%; in another embodiment at a level of from about 40 wt.% to about 75 wt.%; in another embodiment at a level of from about 45 wt.% to about 70 wt.%; and in another embodiment at a level of from about 45 wt.% to about 65 wt.%, based on the weight of the rubber modified thermoplastic resin.

There is no particular limitation on the particle size distribution of the rubber substrate (sometimes referred to hereinafter as initial rubber substrate to distinguish it from the rubber substrate following grafting). In some embodiments the initial rubber substrate may possess a broad, essentially monomodal, particle size distribution with particles ranging in size from about 50 nanometers (nm) to about 1000 nm, and more particularly with particles ranging in size from about 200 nm to about 500 nm. In other embodiments the mean particle size of the initial rubber substrate may be less than about 100 nm. In still other embodiments the mean particle size of the initial rubber substrate may be in a range of between about 80 nm and about 400 nm. In other embodiments the mean particle size of the initial rubber substrate may be greater than about 400 nm. In still other embodiments the mean particle size of the initial rubber substrate may be in a range of between about 400 nm and about 750 nm. In still other embodiments the initial rubber substrate comprises particles which are a mixture of particle sizes with at least two mean particle size distributions. In a particular embodiment the initial rubber substrate comprises a mixture of particle sizes with each mean particle size distribution in a range of between about 80 nm and about 750 nm. In another particular embodiment the initial rubber substrate comprises a mixture of particle sizes, one with a mean particle size distribution in a range of between about 80 nm and about 400 nm; and one with a broad and essentially monomodal mean particle size distribution.

The rubber substrate may be made according to known methods, such as a bulk, solution, or emulsion process. In one non-limiting embodiment the rubber substrate is made by aqueous emulsion polymerization in the presence of a free radical initiator, e.g., an azonitrile initiator, an organic peroxide initiator, a persulfate initiator or a redox initiator system, and, optionally, in the presence of a chain transfer agent, e.g., an alkyl mercaptan, to form particles of rubber substrate.

The rigid thermoplastic resin phase of the rubber modified thermoplastic resin, sometimes referred to hereinafter as the first rigid thermoplastic phase, comprises one or more thermoplastic polymers. In one embodiment of the present invention monomers are polymerized in the presence of the rubber substrate to thereby form the first rigid thermoplastic phase, at least a portion of which is chemically grafted to the elastomeric phase. The portion of the first rigid thermoplastic phase chemically grafted to rubber substrate is sometimes referred to hereinafter as grafted copolymer. In some embodiments two or more different rubber substrates, each possessing a different mean particle size, may be separately employed in a polymerization reaction to prepare the first rigid thermoplastic phase, and then the products blended together to make the rubber modified thermoplastic resin. In illustrative embodiments wherein such products each possessing a different mean particle size of initial rubber substrate are blended together, then the ratios of said substrates may be in a range of about 90:10 to about 10:90, or in a range of about 80:20 to about 20:80, or in a range of about 70:30 to about 30:70. In some embodiments an initial rubber substrate with smaller particle size is the major component in such a blend containing more than one particle size of initial rubber substrate.

The first rigid thermoplastic phase comprises a thermoplastic polymer or copolymer that exhibits a glass transition temperature (Tg) in one embodiment of greater than about 25°C, in another embodiment of greater than or equal to 90°C, and in still another embodiment of greater than or equal to 100°C. In a particular embodiment the first rigid thermoplastic phase comprises a polymer having structural units derived from one or more monomers selected from the group consisting of (C₁-C₁₂)alkyl-(meth)acrylate monomers, aryl-(meth)acrylate monomers, alkenyl aromatic monomers and monoethylenically unsaturated nitrile monomers. Suitable (C₁-C₁₂)alkyl-(meth)acrylate and aryl-(meth)acrylate monomers, alkenyl aromatic monomers and monoethylenically unsaturated nitrile monomers include those set forth hereinabove in the description of the rubber substrate. In addition, the first rigid thermoplastic resin phase may, provided that the Tg limitation for the phase is satisfied, optionally include up to about 10 wt.% of third repeating units derived from one or more other copolymerizable monomers.

The first rigid thermoplastic phase typically comprises one or more alkenyl aromatic polymers. Suitable alkenyl aromatic polymers comprise at least about 20 wt.% structural units derived from one or more alkenyl aromatic monomers. In one embodiment the first rigid thermoplastic phase comprises an alkenyl aromatic polymer having structural units derived from one or more alkenyl aromatic monomers and from one or more monoethylenically unsaturated nitrile monomers. Examples of such alkenyl aromatic polymers include styrene/acrylonitrile copolymers, alpha-methyl styrene/acrylonitrile copolymers, or alpha-methylstyrene/styrene/acrylonitrile copolymers. In another particular embodiment the first rigid thermoplastic phase comprises an alkenyl aromatic polymer having structural units derived from one or more alkenyl aromatic monomers; from one or more monoethylenically unsaturated nitrile monomers; and from one or more monomers selected from the group consisting of (C₁-C₁₂)alkyl- and aryl-(meth)acrylate monomers. Examples of such alkenyl aromatic polymers include styrene/acrylonitrile/methyl methacrylate copolymers, alpha-methylstyrene/acrylonitrile/methyl methacrylate copolymers and alpha-methylstyrene/styrene/acrylonitrile/methyl methacrylate copolymers. Further examples of suitable alkenyl aromatic polymers comprise styrene/methyl methacrylate copolymers, styrene/maleic anhydride copolymers; styrene/acrylonitrile/maleic anhydride copolymers, and styrene/acrylonitrile/acrylic acid copolymers. These copolymers may be used for the first rigid thermoplastic phase either individually or as mixtures.

The first rigid thermoplastic resin phase of the rubber modified thermoplastic resin may, provided that the Tg limitation for the phase is satisfied, optionally include up to about 10 wt.% of repeating units derived from one or more other copolymerizable monomers such as, e.g., monoethylenically unsaturated carboxylic acids such as, e.g., acrylic acid, methacrylic acid, itaconic acid, hydroxy(C₁-C₁₂)alkyl (meth)acrylate monomers such as, e.g., hydroxyethyl methacrylate; (C₄-C₁₂)cycloalkyl (meth)acrylate monomers such as e.g., cyclohexyl methacrylate; (meth)acrylamide monomers such as e.g., acrylamide and methacrylamide; maleimide monomers such as, e.g., N-alkyl maleimides, N-aryl maleimides, maleic anhydride, vinyl esters such as, e.g., vinyl acetate and vinyl propionate. As used herein, the term "(C₄-C₁₂)cycloalkyl" means a cyclic alkyl substituent group having from 4 to 12 carbon atoms per group.

The amount of grafting that takes place between the rubber substrate and monomers comprising the first rigid thermoplastic phase varies with the relative amount and composition of the rubber substrate. In one embodiment, greater than about 10 wt.% of the first rigid thermoplastic phase is chemically grafted to the rubber substrate, based on the total amount of first rigid thermoplastic phase in the composition. In another embodiment, greater than about 15 wt.% of the first rigid thermoplastic phase is chemically grafted to the rubber substrate, based on the total amount of first rigid thermoplastic phase in the composition.. In still another embodiment, greater than about 20 wt.% of the first rigid thermoplastic phase is chemically grafted to the rubber substrate, based on the total amount of first rigid thermoplastic phase in the composition. In particular embodiments the amount of first rigid thermoplastic phase chemically grafted to the rubber substrate may be in a range of between about 5 wt.% and about 90 wt.%; between about 10 wt.% and about 90 wt.%; between about 15 wt.% and about 85 wt.%; between about 15 wt.% and about 50 wt.%; or between about 20 wt.% and about 50 wt.%, based on the total amount of first rigid thermoplastic phase in the composition. In yet other embodiments, about 40 wt.% to 90 wt.% of the first rigid thermoplastic phase is free, that is, non-grafted.

Rigid thermoplastic phase in the compositions may be formed solely by polymerization carried out in the presence of rubber substrate, or by addition of one or more separately synthesized rigid thermoplastic polymers to the rubber modified thermoplastic resin comprising the composition, or by a combination of both processes. Any separately synthesized rigid thermoplastic polymers are sometimes referred to hereinafter as second rigid thermoplastic polymer. The second rigid thermoplastic polymer comprises structural units derived from (d) styrene, acrylonitrile and methyl methacrylate (sometimes referred to herein after as "MMA-SAN"), (e) alpha-methyl styrene, acrylonitrile and methyl methacrylate, (f) alpha-methylstyrene, styrene, acrylonitrile and methyl methacrylate, or (g) mixtures thereof. The second rigid thermoplastic polymer comprises structural units derived from 15-68 wt.% methyl methacrylate, based on the weight of monomers employed. In another embodiment the second rigid thermoplastic polymer comprises structural units derived from 25-65 wt.% methyl methacrylate, based on the weight of monomers employed. In another embodiment the second rigid thermoplastic polymer comprises structural units derived from 30-60 wt.% methyl methacrylate, based on the weight of monomers employed. In other embodiments the second rigid thermoplastic polymer comprises structural units derived from less than 70 wt.%, less than 68% or less than 65% methyl methacrylate, based on the weight of monomers employed. In another embodiment the second rigid thermoplastic polymer comprises structural units derived from 10-50 wt.% styrene, based on the weight of monomers employed. In still another embodiment the second rigid thermoplastic polymer comprises structural units derived from 20-45 wt.% styrene, based on the weight of monomers employed. In another embodiment the second rigid thermoplastic polymer comprises structural units derived from 1-30 wt.% acrylonitrile, based on the weight of monomers employed. In another embodiment the second rigid thermoplastic polymer comprises structural units derived from 10-30 wt.% acrylonitrile, based on the weight of monomers employed. Mixtures comprising at least two second rigid thermoplastic polymers may also be employed. When at least a portion of second rigid thermoplastic polymer is added to the rubber modified thermoplastic resin, then the amount of said separately synthesized rigid thermoplastic polymer added is in one embodiment in a range of between 5 wt.% and 90 wt.%, in another embodiment in a range of between 5 wt.% and 80 wt.%, in another embodiment in a range of between 10 wt.% and 80 wt.%, in another embodiment in a range of between 10 wt.% and 70 wt.%, in another embodiment in a range of between 15 wt.% and 65 wt.%, and in still another embodiment in a range of between 20 wt.% and 65 wt.%, based on the weight of resinous components in the composition.

The composition comprises 10-40 wt.% ABS and 90-60 wt.% MMA-SAN, based on the weight of resinous components in the composition. In another particular embodiment a composition comprises 20-30 wt.% ABS and 80-70 wt.% MMA-SAN, based on the weight of resinous components in the composition. Although typically the elastomeric phase of the rubber modified thermoplastic resin is dispersed in the first rigid thermoplastic phase, those skilled in the art will recognize that a portion of said elastomeric phase may optionally be dispersed in the second rigid thermoplastic polymer or in a mixture of first rigid thermoplastic phase and second rigid thermoplastic polymer.

Both first rigid thermoplastic phase and second rigid thermoplastic polymer may be made according to known processes, for example, mass polymerization, emulsion polymerization, suspension polymerization or combinations thereof, wherein at least a portion of the rigid thermoplastic phase is chemically bonded, i.e., "grafted" to the rubber substrate via reaction with unsaturated sites present in the rubber substrate in the case of the first rigid thermoplastic phase. The grafting reaction may be performed in a batch, continuous or semi-continuous process. Representative procedures include, but are not limited to, those taught in U.S. Patent No. 3,944,631. The unsaturated sites in the rubber substrate are provided, for example, by residual unsaturated sites in those structural units of the rubber that were derived from a graftlinking monomer. In some embodiments of the present invention monomer grafting to rubber substrate with concomitant formation of rigid thermoplastic phase may optionally be performed in stages wherein at least one first monomer is grafted to rubber substrate followed by grafting of at least one second monomer different from said first monomer. Representative procedures for staged monomer grafting to rubber substrate include, but are not limited to, those taught in U.S. Patent No. 7,049,368.

In a particular embodiment the rubber modified thermoplastic resin is an ABS graft copolymer. In another particular embodiment the rubber modified thermoplastic resin is a poly(methylmethacrylate-butadiene-styrene) (MBS) copolymer.

Compositions of the present invention may optionally comprise additives known in the art including stabilizers, such as color stabilizers, heat stabilizers, light stabilizers, antioxidants, UV screeners, and UV absorbers; flame retardants, anti-drip agents, lubricants, flow promoters and other processing aids; plasticizers, antistatic agents, mold release agents, impact modifiers, fillers, and colorants such as dyes or pigments which may be organic, inorganic or organometallic; visual effects additives. Illustrative additives include silica, silicates, zeolites, titanium dioxide, stone powder, glass fibers or spheres, carbon fibers, carbon black, graphite, calcium carbonate, talc, lithopone, zinc oxide, zirconium silicate, iron oxides, diatomaceous earth, calcium carbonate, magnesium oxide, chromic oxide, zirconium oxide, aluminum oxide, crushed quartz, clay, calcined clay, talc, kaolin, asbestos, cellulose, wood flour, cork, cotton or synthetic textile fibers, especially reinforcing fillers such as glass fibers, carbon fibers, metal fibers, and metal flakes, including aluminum flakes. Often more than one additive is included in compositions of the invention, and in some embodiments more than one additive of one type is included. In a particular embodiment a composition further comprises an additive selected from the group consisting of colorants, dyes, pigments, lubricants, stabilizers, heat stabilizers, light stabilizers, antioxidants, UV screeners, UV absorbers, fillers and mixtures thereof.

In some particular embodiments of the invention suitable additives may comprise at least one additive selected from the group consisting of a silicone oil, a hydrocarbon wax, ethylene bisstearamide and mixtures thereof. Silicone oils suitable for use comprise those with a kinematic viscosity in a range of between about 0.2 centimeters squared per second (cm²/s) and about 150 cm²/s in one embodiment; in a range of between about 0.4 cm²/s and about 120 cm²/s in another embodiment; and in a range of between about 0.5 cm²/s and about 100 cm²/s in still another embodiment. Silicone oils are available from numerous sources, for example, from General Electric, Wacker Silicones and Dow Coming. In a particular embodiment a suitable silicone oil comprises at least one polydimethylsiloxane. In another particular embodiment a suitable silicone oil consists essentially of at least one polydimethylsiloxane. In still another particular embodiment a suitable silicone oil consists of polydimethylsiloxane. Hydrocarbon waxes suitable for use comprise nonpolar paraffin waxes, for example, those comprising about C₁₈ carbon units to about C₇₀ carbon units; and polyolefin waxes, for example, those comprising about C₁₀₀-C₇₀₀ carbon units. In particular embodiments suitable waxes comprise polyethylene waxes, such as low density polyethylene wax (LDPE) or high density polyethylene wax (HDPE) with molecular weights in a range of about 1,000-10,000; polypropylene wax; and natural and synthetic paraffin waxes such as those produced by a Fischer-Tropsch process. In other particular embodiments suitable hydrocarbon waxes comprise non-normal hydrocarbon waxes comprising hydrocarbons with molecules containing a chain of carbon atoms which is not entirely straight, but which may include one or more of the following features: (a) branched carbon chains (i.e. side-chains of carbon atoms attached to the main chain); (b) naphthene ring structures (i.e. cycloparaffinic rings; rings of saturated carbon atoms containing no double bonding); or (c) aromatic ring structures. Some illustrative examples of suitable hydrocarbon waxes include, but are not limited to, those supplied by Clariant under the tradename LICOLUB®. Optionally, mixtures of additives may also be employed.

Suitable additives may optionally be present in the compositions in an amount effective to reduce or eliminate susceptibility to scratch formation on the surface of articles made from the compositions. In particular embodiments said additive or additives may be present in an amount in a range of between 0 parts per hundred parts resin (phr) and about 3 phr, or in an amount in a range of between about 0.1 phr and about 3 phr, or in an amount in a range of between about 0.3 phr and about 3 phr, or in an amount in a range of between about 0.3 phr and about 2 phr, or in an amount in a range of between about 0.3 phr and about 1 phr.

When present, an additive may be included in the compositions either in essentially undiluted form or in the form of a masterbatch prepared by pre-combination of one or more additives with a resinous material, such as, but not limited to a rubber modified thermoplastic resin such as one or more of those described herein above, or a thermoplastic polyolefin. In some embodiments the masterbatch is prepared in an extrusion process. The amount of additive in the masterbatch is in one embodiment in a range of 20-60 wt.%, and in another embodiment in a range of 30-50 wt.% based on the weight of the masterbatch.

Articles may be prepared by known thermoplastic processing techniques. Known thermoplastic processing techniques which may be used include extrusion, calendering, kneading, profile extrusion, sheet extrusion, pipe extrusion, coextrusion, molding, extrusion blow molding, thermoforming, injection molding, co-injection molding, rotomolding, combinations of such processes. In some embodiments compositions of the invention exhibit an increase in flow properties during melt processing in contrast to comparative compositions. In other embodiments compositions of the invention exhibit a beneficial decrease in molding cycle time during melt processing in contrast to comparative compositions. In compositions wherein the second rigid thermoplastic polymer comprises structural units derived from MMA, beneficial effects such as a decrease in molding cycle time are observed when the second rigid thermoplastic polymer comprises structural units derived from 68% or 65% or less MMA. In contrast, in compositions wherein the second rigid thermoplastic polymer comprises structural units derived from greater than 70% MMA, detrimental effects are observed such as an increase in molding cycle time compared to compositions containing a second rigid thermoplastic polymer derived from 68% or 65% or less MMA. In one particular embodiment a composition of the invention, wherein the second rigid thermoplastic polymer comprises structural units derived from 68% or 65% or less MMA, has decreased molding cycle time compared to a similar composition wherein the second rigid thermoplastic polymer comprises structural units derived from essentially 100% MMA. The observation that compositions of the invention comprising a second rigid thermoplastic polymer comprising structural units derived from 68% or 65% or less MMA exhibit beneficial properties such as, but not limited to, decreased molding cycle time compared to similar compositions wherein the second rigid thermoplastic polymer comprises structural units derived from greater than 70% MMA constitutes a previously unrecognized and unexpected beneficial effect. In still other embodiments compositions of the invention comprising a second rigid thermoplastic polymer comprising structural units derived from 68% or 65% or less MMA exhibit beneficial properties such as increased impact strength compared to similar compositions wherein the second rigid thermoplastic polymer comprises structural units derived from greater than 70% MMA, wherein impact strength is measured according to the ISO 180 protocol at room temperature. Again, these latter observations constitute a previously unrecognized and unexpected beneficial effect for compositions of the invention in contrast to comparative compositions.

Another embodiment of the invention is a process for forming the multilayer article according to claim 10.

The invention further contemplates additional fabrication operations on said articles, such as, but not limited to, in-mold decoration, baking in a paint oven, surface etching, lamination, and/or thermoforming. In a particular embodiment compositions of the invention may be employed in a profile extrusion process. In other particular embodiments compositions of the invention can be extruded to make sheet, pipe or profile with excellent appearance using general extrusion lines equipped with calibrators at normal production speed.

Articles made from the compositions of the present invention have reduced susceptibility to mar and scratch formation on their surface. Reduced susceptibility to mar and scratch formation may be obtained in some embodiments by adjusting the ratio between the rubber modified thermoplastic resinous components and optionally by adjusting the ratio between rubber modified thermoplastic resinous components and one or more additives. Optimized ratios may be readily determined by those skilled in the art without undue experimentation. In a particular embodiment articles made from compositions of the invention exhibit reduced susceptibility to scratch formation on their surface as measured using the pencil hardness test method ASTM D3363 with 1 kilogram weight. In another particular embodiment articles made from compositions of the invention exhibit minimum pencil hardness of HB as measured using test method ASTM D3363 with 1 kilogram weight. In another particular embodiment the surface of articles made from compositions of the invention exhibit improved % gloss retention in abrasion testing compared to the surface of articles made from comparative compositions.

The articles comprise multilayer articles comprising at least one layer comprising a composition of the present invention. In various embodiments multilayer articles may comprise a cap-layer comprising a composition of the invention and a substrate layer comprising at least one thermoplastic resin different from said cap-layer. In some particular embodiments said substrate layer comprises at least one of an acrylic polymer; PMMA; a rubber-modified acrylic polymer; rubber-modified PMMA; ASA; poly(vinyl chloride) (PVC); acrylonitrile-butadiene-styrene copolymer (ABS); polycarbonate (PC); or mixtures comprising at least one of the aforementioned materials, including, but not limited to, mixtures of ASA and PC; mixtures of ABS and PC; mixtures of ABS and an acrylic polymer; and mixtures of ABS and PMMA. In some particular embodiments PC consists essentially of at least one bisphenol-A polycarbonate. Additional illustrative examples of resins suitable for substrate layers comprise polyesters, such as, but not limited to, poly(alkylene terephthalates), poly(alkylene naphthalates), poly(ethylene terephthalate), poly(butylene terephthalate), poly(trimethylene terephthalate), poly(ethylene naphthalate), poly(butylene naphthalate), poly(cyclohexanedimethanol terephthalate), poly(cyclohexanedimethanol-co-ethylene terephthalate), poly(1,4-cyclohexanedimethyl-1,4-cyclohexanedicarboxylate), polyarylates, the polyarylate with structural units derived from resorcinol and a mixture of iso- and terephthalic acids, polyestercarbonates, the polyestercarbonate with structural units derived from bisphenol-A, carbonic acid and a mixture of iso- and terephthalic acids, the polyestercarbonate with structural units derived from resorcinol, carbonic acid and a mixture of iso- and terephthalic acids, and the polyestercarbonate with structural units derived from bisphenol-A, resorcinol, carbonic acid and a mixture of iso- and terephthalic acids. Additional illustrative examples of resins suitable for substrate layers further comprise aromatic polyethers such as polyarylene ether homopolymers and copolymers such as those comprising 2,6-dimethyl-1,4-phenylene ether units, optionally in combination with 2,3,6-trimethyl-1,4-phenylene ether units; polyetherimides, polyetherketones, polyetheretherketones, polyethersulfones; polyarylene sulfides and sulfones, such as polyphenylene sulfides, polyphenylene sulfones, and copolymers of polyphenylene sulfides with polyphenylene sulfones; polyamides, such as poly(hexamethylene adipamide) and poly(ε-aminocaproamide); polyolefin homopolymers and copolymers, such as polyethylene, polypropylene, and copolymers containing at least one of ethylene and propylene; polyacrylates, poly(methyl methacrylate), poly(ethylene-co-acrylate)s including SURLYN® poly(ethylene-co-acrylate), polystyrene, syndiotactic polystyrene, poly(styrene-co-acrylonitrile), poly(styrene-co-maleic anhydride); and compatibilized blends comprising at least one of any of the aforementioned resins, such as thermoplastic polyolefin (TPO); poly(phenylene ether)-polystyrene, poly(phenylene ether)-polyamide, poly(phenylene ether)-polyester, poly(butylene terephthalate)-polycarbonate, poly(ethylene terephthalate)-polycarbonate, polycarbonate-polyetherimide, and polyester-polyetherimide. Suitable substrate layers may comprise recycled or reground thermoplastic resin. In addition in some embodiments said multilayer article may comprise at least one substrate layer and at least one tielayer between said substrate layer and said cap-layer. Multilayer articles comprising a cap-layer comprised of a composition of the present invention may exhibit reduced susceptibility to mar and scratch formation on the surface of said articles compared to similar articles without said cap-layer.

Applications for articles comprising compositions of the present invention include sheet, pipe capstock, hollow tubes, solid round stock, square cross-section stock, and the like. More complex shapes can also be made, such as those used for building and construction applications, especially a window frame, a sash door frame, pricing channels, corner guards, house siding, gutters, handrails, down-spouts, fence posts, and the like. Additional illustrative applications comprise exterior automotive parts, interior automotive parts, electronic parts, appliance housings and parts, TV parts, TV bezels and the like.

Without further elaboration, it is believed that one skilled in the art can, using the description herein, utilize the present invention to its fullest extent. The following examples are included to provide additional guidance to those skilled in the art in practicing the claimed invention. The examples provided are merely representative of the work that contributes to the teaching of the present application. Accordingly, these examples are not intended to limit the invention, as defined in the appended claims, in any manner.

In the following examples (abbreviated "Ex.") and comparative examples ("C.Ex.") the amounts of components are expressed in wt.% unless noted. Unless noted, MMA-SAN used in the following experiments was derived from 30-40 wt.% MMA, 35-45 wt.% styrene and 20-30 wt.% acrylonitrile. Notched Izod impact strength (NII) values were determined according to ISO 180 at room temperature. Melt volume rate (MVR) values was determined at 220°C using a 10 kilogram weight according to ISO 1133. Molded test specimens were subjected to color measurements (jetness) in the CIE L*a*b* space using a MacBeth 7000 spectrophotometer. Pencil hardness values were obtained according to test method ASTM D3363.

### EXAMPLE 1 AND COMPARATIVE EXAMPLES 1-4

Compositions were compounded from the components shown in Table 1. Unless noted, each composition contained in addition 1 part per hundred parts resinous components (phr) of pigment black, 0.1 phr silicone oil and 1.1 phr of a mixture of lubricants and stabilizers. The compounded material was molded into test parts and the parts were tested for physical properties. The test results are shown in Table 1.

**TABLE 1**

| Component | C.Ex. 1 | C.Ex. 2 | C.Ex. 3 | Ex. 1 | C.Ex. 4 |
|---|---|---|---|---|---|
| MMA-SAN | -- | -- | -- | 75 | -- |
| ABS | 25 | -- | 25 | 25 | 25 |
| SAN | 75 | -- | -- | -- | 44 |
| PMMA | -- | 100* | 75 | -- | 31 |
| | | | | | |
| Pencil hardness (1kg) | B | 2H | HB | HB | 2B |
| MVR | 24.7 | 17 | 7.6 | 24.5 | 20.5 |
| NII, kJ/m² | 8.3 | 2.3 | 8.3 | 7 | 8.6 |
| Jetness: L* excluded | 6.5 | 3 | 7.5 | 5.1 | 8.3 |

| | | | | | |
|---|---|---|---|---|---|
| * composition contains no silicone oil | | | | | |

A typical ABS/SAN formulation (comparative example 1) has a good balance of flow and impact strength properties, but the scratch performance is unacceptably low (pencil hardness value of B). Comparative example 2 shows that PMMA has very good scratch performance (pencil hardness value of 2H) but it has very low impact strength (NII value of 2.3 kJ/m²). Comparative example 3 shows that by combining PMMA and ABS, one can increase the low impact strength of PMMA but the processability of the blend as measured by flow rate is greatly reduced (7.6 MVR).

Example 1 shows an embodiment of the invention based on combining MMA-SAN with ABS. This composition exhibits better pencil hardness than either comparative example 1 (HB vs. B) or comparative example 4 (HB vs. 2B). Example 1 also shows a good balance of flow and impact strength properties. This is a surprising result because comparative example 4 shows that a comparable blend of PMMA/SAN with ABS results in unacceptable scratch performance (pencil hardness value of 2B) and also higher, less attractive jetness value. Unexpectedly, the MMA-SAN copolymer blended with ABS results in better physical properties than does blending the individual PMMA and SAN components with ABS. The combination of good pencil hardness with increased impact strength and good flow properties makes compositions in embodiments of the invention comprising MMA-SAN suitable for many commercial uses.

### EXAMPLE 2 AND COMPARATIVE EXAMPLES 5-8

Compositions were compounded from the components shown in Table 2. Unless noted, each composition contained in addition 0.5 phr of a dye package and 1.1 phr of a mixture of lubricants and stabilizers. The compounded material was molded into test parts and the parts were tested for physical properties. The test results are shown in Table 2.

**TABLE 2**

| Component | C.Ex. 5 | C.Ex. 6 | C.Ex. 7 | Ex. 2 | C.Ex. 8 |
|---|---|---|---|---|---|
| MMA-SAN | -- | -- | -- | 75 | -- |
| ABS | 100* | -- | 25 | 25 | 25 |
| SAN | -- | -- | -- | -- | 49 |
| PMMA | -- | 100 | 75 | -- | 26 |
| | | | | | |
| Pencil hardness (1kg) | 2B | 2H | HB | HB | HB |
| MVR | 22 | 18.5 | 10.6 | 26 | 20.1 |
| NII, kJ/m² | 16.4 | 2.5 | 9.9 | 14.9 | 11.7 |
| Jetness : L* excluded | 3 | 1 | 6.3 | 2.6 | 4.4 |

| | | | | | |
|---|---|---|---|---|---|
| * composition contains no mixture of lubricants and stabilizers | | | | | |

Comparative example 5 shows that a good jetness can be achieved with ABS but the scratch performance is still deficient (pencil hardness value of 2B). Comparative example 6 shows that PMMA has an excellent jetness and scratch resistance but poor Izod impact strength value. Comparative example 7 shows that blends of PMMA and ABS have improved scratch performance but the jetness is poor (L* excluded value of 6.3). Example 2 shows an embodiment of the invention based on combining MMA-SAN with ABS. This composition exhibits good pencil hardness, good flow and impact strength properties and also good jetness. This is a surprising result because comparative example 8 shows that a comparable blend of PMMA/SAN with ABS has increased jetness value and decreased flow properties compared to Example 2. Unexpectedly, the MMA-SAN copolymer blended with ABS results in better physical properties than does blending the individual PMMA and SAN components with ABS.

### EXAMPLES 3-4 AND COMPARATIVE EXAMPLES 9-10

Compositions were compounded from the components shown in Table 3. Each of the compositions contained 75% by wt. MMA-SAN with various MMA content (10%, 35%, 60% and 80 % MMA). Unless noted, each composition also contained 0.5 phr of a dye package and 1.1 phr of a mixture of lubricants and stabilizers. The compounded material was molded into test parts and the parts were tested for physical properties. The test results are shown in Table 3.

**TABLE 3**

| Component | C.Ex. 9 | Ex. 3* | Ex. 4 | C.Ex. 10 |
|---|---|---|---|---|
| MMA-SAN | 75 | 75 | 75 | 75 |
| ABS | 25 | 25 | 25 | 25 |
| | | | | |
| MMA-SAN composition | | | | |
| MMA | 10 | 35 | 60 | 80 |
| Styrene | 55 | 40 | 25 | 12 |
| Acrylonitrile | 35 | 25 | 15 | 8 |
| | | | | |
| Properties | | | | |
| Pencil hardness (1kg) | B-HB | HB | HB-F | F |
| MVR | 5.5 | 26 | 33.2 | 19.6 |
| NII, kJ/m² | 15.9 | 14.9 | 6.2 | 6 |
| Jetness : L* excluded | 6.5 | 2.6 | 3 | 3.3 |

| | | | | |
|---|---|---|---|---|
| * composition contains no mixture of lubricants and stabilizers | | | | |

Comparative Example 9 shows that if MMA content in MMA-SAN is decreased, the scratch resistance as measured by pencil hardness decreases and the jetness value increases resulting in a less attractive surface appearance (L* excluded of 6.5 at 10% MMA). Comparative Example 10 shows that as MMA content is increased in the MMA-SAN, the balance between flow and impact strength is not as good. In contrast, Examples 3 and 4 of the invention show good balance of flow property, impact strength, jetness and scratch resistance as measured by pencil hardness.

## Claims

1. A multilayer article comprising at least one layer formed from a resinous composition, wherein the composition comprising:
(i) 10-40 wt.%, based on the weight of resinous components in the composition, of at least one rubber modified thermoplastic resin comprising a discontinuous elastomeric phase dispersed in a first rigid thermoplastic phase, wherein at least a portion of the first rigid thermoplastic phase is grafted to the elastomeric phase, and wherein the elastomeric phase comprises structural units derived from a monomer selected from the group consisting of butadiene and butadiene-styrene mixture; and wherein the first rigid thermoplastic phase comprises structural units derived from at least one vinyl aromatic monomer, at least one monoethylenically unsaturated nitrile monomer, and optionally at least one (C₁-C₁₂)alkyl- and aryl-(meth)acrylate monomer;
(ii) 90-60 wt.%, based on the weight of resinous components in the composition, of a second rigid thermoplastic polymer comprising structural units derived from monomers selected from the group consisting of styrene/acrylonitrile/methyl methacrylate, alpha-methyl styrene/acrylonitrile/ methyl methacrylate, alpha-methylstyrene/styrene/acrylonitrile/methyl methacrylate, and mixtures thereof, wherein said structural units are derived from 15-68 wt. % methyl methacrylate, based on the weight of monomers employed; and
(iii) at least one additive, colorant, dye or pigment;
wherein the at least one layer has reduced susceptibility to scratch formation during abrasion of its surface as measured using the pencil hardness test method ASTM D3363 with 1 kilogram weight.

2. The multilayer article of claim 1, wherein the rubber modified thermoplastic resin comprises ABS.

3. The multilayer article of claim 1, wherein the second rigid thermoplastic polymer comprises MMA-SAN.

4. The multilayer article of claim 3, wherein the MMA-SAN is derived from about 10-50 wt.% styrene and about 1-30 wt.% acrylonitrile.

5. The multilayer article of claim 1, wherein the resinous composition further comprises at least one additive selected from the group consisting of a stabilizer; a color stabilizer; a heat stabilizer; a light stabilizer; an antioxidant; a UV screener; a UV absorber; a flame retardant; an anti-drip agent; a lubricant; a flow promoter; a processing aid; a plasticizer; an antistatic agent; a mold release agent; an impact modifier; a filler; and mixtures thereof.

6. The multilayer article of claim 1, wherein the at least one layer exhibits a pencil hardness value of at least HB as measured according to ASTM D3363.

7. The multilayer article of claim 1 which comprises a sheet, pipe capstock, hollow tube, solid round stock, square cross-section stock, building or construction application article, window frame, sash door frame, pricing channel, corner guard, house siding, gutter, handrail, down-spout, fence post, exterior automotive part, interior automotive part, electronic part, appliance housing or part, TV part, or TV bezel.

8. The multilayer article of claim 1, wherein the additive, colorant, dye or pigment is selected from the group consisting of a carbon black, titanium dioxide and mixtures thereof.

9. The multilayer article of claim 1, further comprising a substrate layer comprising at least one thermoplastic resin different from the at least one layer, and wherein the at least one layer is a cap-layer.

10. A process for forming the multilayer article of claim 1, comprising forming the multilayer article from a thermoplastic processing technique selected from the group consisting of extrusion, calendering, kneading, molding, thermoforming, injection molding, co-injection molding, rotomolding, and combinations of such processes.

11. The process of claim 10, wherein the thermoplastic processing technique is selected from the group consisting of profile extrusion, sheet extrusion, pipe extrusion, coextrusion extrusion blow molding, injection molding, rotomolding, and combinations of such processes.

## Patentansprüche

1. Ein vielschichtiger Artikel mit wenigstens einer Schicht, die aus einer Harzzusammensetzung gebildet ist, wobei die Zusammensetzung Folgendes aufweist:
(i) 10 bis 40 Gew.-%, auf der Basis des Gewichtes von Harzkomponenten in der Zusammensetzung, von wenigstens einem gummimodifizierten thermoplastischen Harz umfassend eine diskontinuierliche elastomere Phase, die in einer ersten starren thermoplastischen Phase dispergiert ist, wobei wenigstens ein Teil der ersten starren thermoplastischen Phase auf die elastomere Phase gepfropft ist, und wobei die elastomere Phase Struktureinheiten aufweist, die von einem Monomer abgeleitet sind, das aus der Gruppe ausgewählt ist, die aus Butadien und einer Butadien-Styrol-Mischung besteht; und wobei die erste starre thermoplastische Phase Struktureinheiten aufweist, die von wenigstens einem aromatischen Vinyl-Monomer abgeleitet sind, wenigstens einem ungesättigten Monoethylen-Nitril-Monomer, und optional wenigstens einem (C₁-C₁₂)Alkyl- und Aryl-(Meth)Acrylat-Monomer;
(ii) 90 bis 60 Gew.-% auf der Basis der Harzkomponenten in der Zusammensetzung von einem zweiten starren thermoplastischen Polymer, das Struktureinheiten aufweist, die von Monomeren abgeleitet sind, die aus der Gruppe ausgewählt sind, die aus Styrol/Acrylnitril/Methyl-Metaacrylat, Alpha-Methylstyrol/Acrylnitril/Methyl-Metaacrylat, Alpha-Methylstyrol/Styrol/Acrylnitril/Methyl-Metaacrylat und Mischungen daraus besteht, wobei die genannten Struktureinheiten von 15 bis 68 Gew.-% Methyl-Metaacrylat auf der Basis des verwendeten Monomers abgeleitet sind; und
(iii) wenigstens ein Additiv, ein Färbungsmittel, eine Farbe oder ein Pigment, wobei die wenigstens eine Schicht eine reduzierte Empfindlichkeit zur Bildung von Kratzern bei der Abrasion ihrer Oberfläche aufweist, wie gemessen unter Verwendung des Bleistift-Härtetestverfahrens ASTM D3363 mit einem Gewicht von 1 kg.

2. Der vielschichtige Artikel nach Anspruch 1, bei dem das gummimodifizierte thermoplastische Harz ABS aufweist.

3. Der vielschichtige Artikel nach Anspruch 1, bei dem das zweite starre thermoplastische Polymer MMA-SAN aufweist.

4. Der vielschichtige Artikel nach Anspruch 3, bei dem das MMA-SAN von ungefähr 10 bis 50 Gew.-% Styrol und ungefähr 1 bis 30 Gew.-% Acrylnitril abgeleitet ist.

5. Der vielschichtige Artikel nach Anspruch 1, bei dem die Harzzusammensetzung ferner wenigstens ein Additiv aufweist, das aus der Gruppe ausgewählt ist, die aus einem Stabilisator, einem Farbstabilisator, einem Wärmestabilisator, einem Lichtstabilisator, einem Antioxidanz, einem UV-Screener, einem UV-Absorber, einem Flammenunterdrücker, einem Anti-Tropf-Reagenz, einem Schmiermittel, einem Fließverbesserer, einer Verarbeitungshilfe, einem Plastizierer, einem antistatischen Reagenz, einem Formtrenn-Reagenz, einem Aufprallmodifizierer, einem Füller und Mischungen davon besteht.

6. Der vielschichtige Artikel nach Anspruch 1, bei dem die wenigstens eine Schicht einen Bleistifthärtewert von wenigstens HB, gemessen gemäß ASTM D3363 aufweist.

7. Der vielschichtige Artikel nach Anspruch 1, der Folgendes umfasst: eine Folie, einen Rohrstopfen, ein hohles Rohr, ein massives Rundmaterial, ein im Querschnitt quadratisches Material, ein Bau- oder Konstruktionshilfsmittel, einen Fensterrahmen, einen Türblattrahmen, einen Preiskanal, einen Hauszuschnitt, eine Dachrinne, einen Handlauf, ein Fallrohr, ein Kfz-Außenteil, ein Kfz-Innenteil, ein Elektronikteil, ein Gerätegehäuse oder -teil, ein Fernsehteil oder eine Fernsehscheibe.

8. Der vielschichtige Artikel nach Anspruch 1, bei dem das Additiv, der Farbstoff, die Farbe oder das Pigment aus der Gruppe ausgewählt ist, die aus Ruß, Titandioxid und Mischungen hiervon besteht.

9. Der vielschichtige Artikel nach Anspruch 1, ferner umfassend eine Substratschicht, die wenigstens ein thermoplastisches Harz aufweist, das sich von wenigstens einer anderen Schicht unterscheidet, und wobei die wenigstens eine Schicht eine Deckelschicht ist.

10. Ein Verfahren zum Formen des vielschichtigen Artikels nach Anspruch 1, umfassend das Formen des vielschichtigen Artikels mittels eines thermoplastischen Verarbeitungsverfahrens, das aus der Gruppe ausgewählt ist, die aus Extrudieren, Kalandern, Kneten, Gießformen, Heißformen, Spritzgießformen, Co-Injektionsverfahren, Rotationsschmelzen und Kombinationen von solchen Verfahren besteht.

11. Das Verfahren nach Anspruch 10, bei dem das thermoplastische Verarbeitungsverfahren aus der Gruppe ausgewählt ist, die besteht aus Profilextrudieren, Folienextrudieren, Rohrextrudieren, Co-Extrusionsblasformen, Spritzgießformen, Rotationsschmelzen und Kombinationen von solchen Verfahren besteht.

## Revendications

1. Un article multicouche comprenant au moins une couche formée à partir d'une composition résineuse, la composition comprenant :
(i) de 10 à 40 % en poids, rapporté au poids des constituants résineux dans la composition, d'au moins une résine thermoplastique modifiée par caoutchouc comprenant une phase élastomérique discontinue dispersée dans une première phase thermoplastique rigide, dans lequel au moins une portion de la première phase thermoplastique rigide est greffée sur la phase élastomérique, et dans lequel la phase élastomérique comprend des unités structurales dérivées d'un monomère sélectionné dans le groupe constitué de butadiène et d'un mélange butadiène-styrène ; et dans lequel la première phase thermoplastique rigide comprend des unités structurales dérivées d'au moins un monomère vinylaromatique, d'au moins un monomère nitrile monoéthyléniquement insaturé, et facultativement d'au moins un monomère alkyl en C₁-C₁₂ et aryl-(méth)acrylate ;
(ii) de 90 à 60 % en poids, rapporté au poids des constituants résineux dans la composition, d'un deuxième polymère thermoplastique rigide comprenant des unités structurales dérivées de monomères sélectionnés dans le groupe constitué de styrène/acrylonitrile/méthacrylate de méthyle, alpha-méthyl styrène/acrylonitrile/méthacrylate de méthyle, alpha-méthyl styrène/styrène/acrylonitrile/méthacrylate de méthyle, et de mélanges de ceux-ci, dans lequel lesdites unités structurales sont dérivées de 15 à 68 % en poids de méthacrylate de méthyle, rapporté au poids des monomères employés ; et
(iii) au moins un additif, colorant, teinture ou pigment ;
dans lequel l'au moins une couche a réduit la sensibilité à la formation de rayure durant l'abrasion de sa surface tel que mesuré en utilisant la méthode d'essai de dureté au crayon ASTM D3363 avec un poids d'1 kilogramme.

2. L'article multicouche de la revendication 1, dans lequel la résine thermoplastique modifiée par caoutchouc comprend de l'ABS.

3. L'article multicouche de la revendication 1, dans lequel le deuxième polymère thermoplastique rigide comprend du MMA-SAN.

4. L'article multicouche de la revendication 3, dans lequel le MMA-SAN est dérivé d'environ 10 à 50 % en poids de styrène et d'environ 1 à 30 % en poids d'acrylonitrile.

5. L'article multicouche de la revendication 1, dans lequel la composition résineuse comprend en outre au moins un additif sélectionné dans le groupe constitué d'un stabilisant ; d'un stabilisant de la couleur ; d'un stabilisant thermique ; d'un stabilisant à la lumière ; d'un antioxydant ; d'un cribleur d'UV ; d'un absorbeur d'UV ; d'un ignifugeant ; d'un agent anti-goutte ; d'un lubrifiant ; d'un promoteur d'écoulement ; d'un agent de traitement ; d'un plastifiant ; d'un agent antistatique ; d'un agent de démoulage ; d'un modificateur d'impact ; d'une charge ; et de mélange de ceux-ci.

6. L'article multicouche de la revendication 1, dans lequel l'au moins une couche présente une valeur de dureté au crayon d'au moins HB telle que mesurée selon l'ASTM D3363.

7. L'article multicouche de la revendication 1 qui comprend une feuille, un matériau de protection de tuyau, un tube creux, un matériau arrondi solide, un matériau en coupe transversale carrée, un article d'application de réalisation de bâtiments ou de construction, un cadre de fenêtre, un cadre de porte vitrée, un porte-prix, une baguette d'angle, un parement de maison, une gouttière, une main courante, un tuyau de descente, un poteau de clôture, une pièce détachée automobile extérieure, une pièce détachée automobile intérieure, une pièce détachée électronique, une pièce détachée ou un logement d'appareil électroménager, une pièce détachée de télévision, ou un encadrement de télévision.

8. L'article multicouche de la revendication 1, dans lequel l'additif, le colorant, la teinture ou le pigment est sélectionné dans le groupe constitué d'un noir de carbone, de dioxyde de titane et de mélanges de ceux-ci.

9. L'article multicouche de la revendication 1, comprenant en outre une couche de substrat comprenant au moins une résine thermoplastique différente de l'au moins une couche, et dans lequel l'au moins une couche est une couche superficielle.

10. Un procédé pour former l'article multicouche de la revendication 1, comprenant le fait de former l'article multicouche à partir d'une technique de traitement thermoplastique sélectionnée dans le groupe constitué d'extrusion, de calandrage, de pétrissage, de moulage, de thermoformage, de moulage par injection, de moulage par co-injection, de rotomoulage, et de combinaisons de tels procédés.

11. Le procédé de la revendication 10, dans lequel la technique de traitement thermoplastique est sélectionnée dans le groupe constitué d'extrusion de profilé, d'extrusion de feuille, d'extrusion de tuyau, de moulage par extrusion coextrusion soufflage, de moulage par injection, de rotomoulage, et de combinaisons de tels procédés.
